# EUROPEAN PATENT APPLICATION

(11) **EP 4 769 672 A1**
(43) Date of publication of application: **01.07.2026**
(21) Application number: 24904271.4
(22) Date of filing: 12.12.2024
(51) Int. Cl.: H01M 10/658, H01M 50/24

(54) **BATTERY PACK**

(30) Priority: 14.12.2023 KR 20230182402
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2024/020277
(87) International publication number: WO 2025/127706

(57) **Abstract**

A battery pack is disclosed. The battery pack includes: a pack case; a barrier installed to partition the inside of the pack case into multiple accommodation spaces; battery modules arranged in the multiple accommodation spaces, respectively; first heat insulation members which are arranged in the accommodation spaces to support lower parts of the battery modules and block heat from being transferred to a neighboring battery module through a lower part of the pack case during thermal runaway of the battery modules; and multiple second heat insulation members respectively arranged below the first heat insulation members and provided with heat insulation space parts for blocking heat from being transferred to a neighboring battery module through the lower part of the pack case during thermal runaway of the battery modules.

## Description

### [TECHNICAL FIELD]

This application claims the benefit of priority based on Korean Patent Application No. 10-2023-0182402 filed on December 14, 2023, entire content disclosed in the document of the patent applications is included as a part of this specification.

The present invention relates to a battery pack capable of: blocking heat generated during thermal runaway of a battery module from being transmitted to a neighboring battery module through the lower plate of a pack case in which the battery module is placed; and protecting the neighboring battery module even when gas and flame flow back to the neighboring battery module. The battery pack may prevent a thermal runaway chain reaction in the neighboring battery module.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic secondary batteries and pouch-type secondary batteries that can be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these secondary batteries is approximately 2.5V to 4.2V. When a higher output voltage is required, a battery module is constituted by connecting multiple secondary batteries in series, and a battery package is constituted by connecting multiple battery modules in series. In addition, a battery pack is constituted by connecting multiple battery cells in parallel according to the charge and discharge capacity required for the battery pack. Accordingly, the number of battery cells, the number of battery modules and the electrical connection structure of the battery pack may be selected in various ways according to the required output voltage or charge and discharge capacity.

Battery cells embedded in a battery module are formed by stacking a resin separator between the anode and cathode. However, polyethylene separators decompose at approximately 130°C, while polypropylene separators begin to decompose at approximately 170°C. The electrolyte decomposes at approximately 200°C, releasing heat.

In a battery module containing a variety of battery cells, an external shock may cause a single battery cell to explode, but internal factors, such as a temperature rise, may also cause a single cell to explode.

During the charge and discharge process of the battery pack, heat generated within the battery module may not be effectively dissipated. In such case, heat builds up in some battery modules, which leads to degradation of the battery cells in the module, and thermal runaway may occur as degradation rapidly progresses. When thermal runaway occurs, the structure of anode material collapses, thereby generating oxygen that further accelerates heat generation. As a result, a situation arises where the temperature rise of the battery cell cannot be controlled.

In such a thermal runaway situation, since the gases and flames from the explosion of a single battery cell are not quickly discharged to outside, thermal propagation, flames, or high-temperature, high-pressure gases affect other nearby battery cells, resulting in a more serious problem such as chain reaction of explosions. That is, when one battery cell explodes in a battery module, other battery cells within the module may explode in a chain reaction. This may lead to thermal runaway of the battery module. Therefore, a technology for preventing the thermal runaway chain reaction before the battery cells within the module reaches the thermal runaway initiation temperature is necessary.

Conventionally, thermal resin was arranged between the lower surface of each battery module and the lower plate of the pack case so as to promote heat dissipation by dissipating the thermal energy generated within the battery module through the thermal resin and the lower plate. Heat sinks are additionally installed on the inside or outside of the lower plate to improve the heat dissipation performance of the battery pack.

Conventionally, to prevent thermal runaway, technology development is focused on more quickly dissipating thermal energy in the event of battery module ignition or thermal runaway.

However, when thermal runaway occurs in some of the battery modules among a plurality of battery modules, thermal propagation to neighboring battery modules may be accelerated through the thermal resin with superior thermal conductivity and the lower plate of the pack case, accelerating a thermal runaway chain reaction. Accordingly, the risk of ignition and explosion in the battery pack is increased.

Meanwhile, a barrier is installed across the interior of the battery pack case. The barrier divides the internal space of the pack case into a plurality of accommodating spaces that accommodate the plurality of battery modules. The barrier reinforces the rigidity of the battery pack and acts as a firewall between the plurality of battery modules, preventing flame propagation to neighboring battery modules. However, simple conventional barrier structures have limitations in preventing flame propagation to neighboring battery modules and fail to block thermal propagation.

Therefore, under the above-described thermal runaway situation, research for means of preventing the heat generated in one battery module from being transmitted to an adjacent battery module is necessary.

The background art of the present invention is disclosed in Korean Patent Application Publication No. 2022-0035770 (published on March 22, 2022, titled A Battery Pack With Thermal Propagation Prevention Structure Between Battery Modules).

### [DISCLOSURE]

### [TECHNICAL PROBLEM]

The present invention was devised to solve the above-described problem.

The present invention was devised from focusing on, of the causes of thermal runaway in a battery pack, the path through which heat generated by thermal runaway of one battery module is transmitted to other battery modules.

It is an object of the present invention to provide a battery pack capable of preventing thermal propagation to a neighboring battery module through the lower plate of the pack case in the event of thermal runaway of a battery module.

It is an object of the present invention to provide a battery pack capable of preventing a thermal runaway chain reaction in neighboring battery modules..

It is an object of the present invention to provide a battery pack capable of protecting a neighboring battery module even when gas and flame flow back to the neighboring battery module.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

Heat dissipation structure of a conventional battery module applied to a lower plate of a pack case of a battery for preventing battery cell degradation in the battery module may actually promote thermal propagation during thermal runaway of the battery module.

The present invention may be applied to a battery pack including a pack case and a plurality of battery modules arranged in the pack case.

The battery pack includes a barrier installed in the pack case. The barrier divides the volume inside the pack case into a plurality of accommodating spaces. A plurality of battery modules are arranged in the plurality of accommodating spaces, respectively.

In order to solve above-described problems, the battery pack of the present invention includes a plurality of first insulation members blocking a thermal propagation to an adjacent battery module through a lower portion of the pack case during thermal runaway of the plurality of battery modules. The plurality of first insulation members are disposed in the plurality of accommodating spaces, respectively. The plurality of first insulation members are disposed under the plurality of battery modules to support lower portions of the plurality of battery modules, respectively.

In addition, in order to solve above-described problems, the battery pack of the present invention includes a plurality of second insulation members disposed under the plurality of first insulation members, respectively. Each of the plurality of second insulation members is provided with an insulation space to block the thermal propagation to the adjacent battery module through the lower portion of the pack case during thermal runaway of the plurality of battery modules.

The plurality of second insulation members may be stacked under the plurality of first insulation members.

The upper surface of each of the plurality of first insulation members may be disposed higher than the bottom surface of the pack case.

The upper surfaces of the plurality of first insulation members may face the lower surfaces of the plurality of battery modules. Preferably, the upper surfaces of the plurality of first insulation members may be in contact with the lower surfaces of the plurality of battery modules.

The upper surface of each of the plurality of battery modules may be disposed higher than the bottom surface of the pack case.

The lower surfaces of the plurality of battery modules may not be in direct contact with the bottom surface of the pack case.

Preferably, each of the plurality of first insulation members may be formed to be wider than the lower surface of each of the plurality of battery modules.

The plurality of first insulation members may be included in the heat conduction path from the lower surfaces of the plurality of battery modules to the bottom surface of the pack case.

Preferably, the bottom surface of each of the plurality of accommodating spaces may be wider than each of the plurality of first insulation members. Accordingly, at least a portion of the bottom surface of each of the plurality of accommodating spaces may be exposed toward the plurality of accommodating spaces.

At least a portion of the plurality of second insulation members may be embedded in the bottom of the pack case.

The insulation space of each of the plurality of second insulation members may be disposed lower than the bottom surface of the pack case.

The plurality of second insulation members may be installed so as to be laterally spaced apart from each other. A barrier may be disposed between the laterally adjacent second insulation members.

The insulation space may be wider than the lower surface of each of the plurality of battery modules.

Preferably, the width of each of the plurality of second insulation members may substantially correspond to the width of each of the plurality of first insulation members.

Each of the plurality of second insulation members may include one or more partition walls partitioning the insulation space into a plurality of spaces.

In some embodiments, the partition wall may laterally partition the insulation space.

In some embodiments, the partition wall may partition the insulation space in a first direction and also in a second direction intersecting the first direction.

In some embodiments, the partition wall may partition the insulation space laterally and vertically.

The partition wall may be vertically erected in the insulation space to support the plurality of second insulation members.

In some embodiments, the partition wall may partition the insulation space in vertical direction.

The battery pack may further include a heat-resistant cover installed to surround an upper side surface and a sidewall surface of each of the plurality of battery modules to protect the plurality of battery modules from transmitted flames.

Preferably, the barrier may be provided with a barrier insulation space therein. Accordingly, the barrier may not only shield the flame during thermal runaway, but also suppress thermal propagation.

The first and second insulation members only prevent thermal propagation between battery modules and do not impede heat dissipation within the battery module. The heat dissipation promoting structure of the battery module may be implemented without overlapping the thermal propagation prevention structure between battery modules described above.

The heat dissipation promoting structure of the battery module may be implemented through the bottom surface of the pack case, which is exposed to the accommodating space.

### [ADVANTAGEOUS EFFECTS]

According to the present invention, when a specific battery module undergoes thermal runaway, thermal propagation to the lower plate of the pack case is blocked by the first insulation member and/or the insulation space, thereby preventing thermal propagation to the lower plate. As a result, a thermal runaway chain reaction may be prevented.

According to the present invention, by providing the first insulation member and the second insulation member in a stacked form, the first insulation member may be made thinner achieving the same insulation effect compared to using only a first insulation member such that the rigidity of the laminate of the first and second insulation members may be further secured.

According to the present invention, since at least a portion of the second insulation members is embedded in the lower plate of the pack case, the second insulation members may contribute to improving the rigidity of the lower plate.

According to the present invention, since a plurality of separated secondary insulation members are installed in a plurality of accommodating spaces, respectively, the plurality of second insulation members may be physically and thermally isolated from each other, and a heat dissipation structure of the battery module may be constructed through at least a portion of the lower plate of the pack case disposed between adjacent second insulation members. Accordingly, heat dissipation of battery modules under normal circumstances may be promoted and thermal propagation between battery modules under thermal runaway conditions may be suppressed.

According to the present invention, since a heat-resistant cover is installed to surround the battery module, the battery module is protected from gases or flames flowing back through the top hole in the event of thermal runaway.

According to the present invention, since the partition wall divides the insulation space into a plurality of spaces, the rigidity of the secondary insulation members may be increased, and gas convection within the insulation space may be suppressed, thereby enhancing the thermal propagation suppression effect.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery pack according to a first embodiment of the present invention.
FIG. 2 is a front cross-sectional view of the battery pack of FIG. 1.
FIG. 3 is an exploded perspective view of a battery module embedded in the battery pack of FIG. 1 and an insulation member and a heat-resistant cover arranged around the battery module.
FIG. 4 is an enlarged view of section 4 of FIG. 2.
FIG. 5 is an enlarged view of the insulation member of the battery pack according to a second embodiment.
FIG. 6 is a cross-sectional view taken along the line 6-6 of FIG. 5.
FIG. 7 is a diagram schematically illustrating a battery pack according to a third embodiment of the present invention.
FIG. 8 is an enlarged view of section 8 of FIG. 7.
FIG. 9 is a partially exploded perspective cross-sectional view illustrating a structure of a second insulation member according to a fourth embodiment.
FIG. 10 is a diagram illustrating a thermal propagation path when a battery module of a battery pack undergoes thermal runaway.

[DESCRIPTION OF REFERENCE NUMERALS]

100: battery pack
110: pack case
111: lower plate
112: pack lid
113: accommodating space
118: side plate
120: barrier
122: barrier insulation space
130: battery module
140: first insulation member
150: second insulation member
151: insulation space
153,155: partition wall
160: cooling path
170: heat-resistant cover

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected to" or "in contact with" another element, the element may be directly connected to or in direct contact with another element, or there may exist an interposing element in the middle. On the other hand, when an element is referred to as being "directly connected to" or "in direct contact with" another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery pack according to a first embodiment of the present invention will be described.

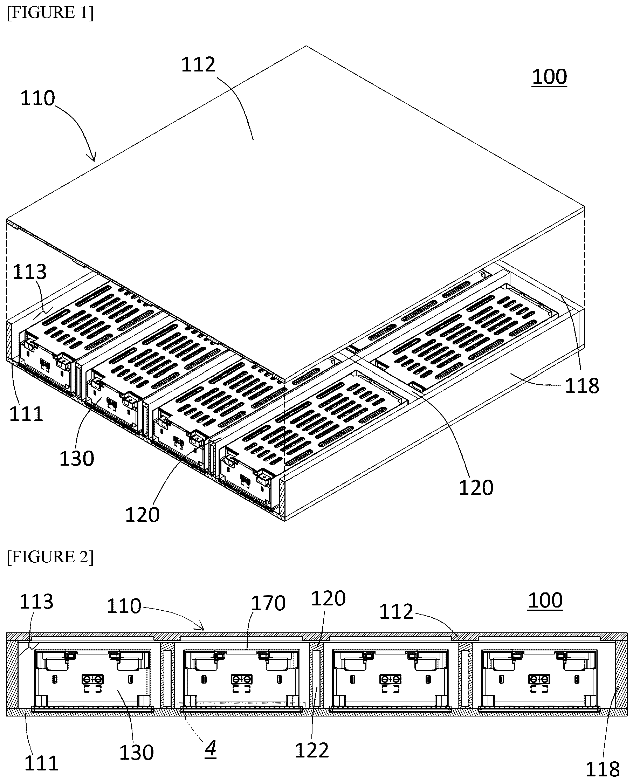

Referring to FIGS. 1 to 4, a battery pack 100 according to the embodiment of the present invention includes: a pack case 110; a barrier insulation space 122; a battery module 130; a plurality of first insulation members 140; and a plurality of second insulation members 150.

The pack case 110 includes: a lower plate 111; a side plate 118 extending vertically and connected to the periphery of the lower plate 111; and a pack lid 112 connected to the upper portion of the side plate 118 and covering an internal space defined by the lower plate 111 and the side plate 118. The lower plate 111 and the pack lid 112 has rectangular shapes, and the side plate 118 has rectangular frame shape and surrounds the periphery of the lower plate 111 and the pack lid 112. The pack case 110 is formed using a material with excellent thermal conductivity such as aluminum in order to dissipate the thermal energy of the battery module 130.

Inside the pack case 110, one or more partition wall-shaped barriers 120 are installed to divide the internal space into a plurality of accommodating spaces 113 that accommodate the plurality of battery modules 130, respectively. The barriers 120 are installed to extend across the interior of the pack case 110 in a first direction and/or a second direction intersecting the first direction, thereby forming the plurality of accommodating spaces 113 arranged in a grid pattern. In the embodiment, three barriers extending in the first direction and one barrier extending in the second direction are exemplified.

The upper and lower end portions of the barrier 120 may have straight beam shape to support the lower plate 111 and the upper plate 112. Additionally, the extending end portions of the barrier 120 support the side plate 112. That is, the barrier 120 divides the internal space into the plurality of accommodating spaces 113 and also reinforces the rigidity of the pack case 110. Accordingly, even when external shock or vibration is transmitted to the pack case 110, the rigidity of the pack case 110 and the barrier 120 prevents deformation or collapse of the battery pack 100.

A hollow barrier insulation space 122 is provided inside the barrier 120. The barrier insulation space 122 enhances the insulation performance of the barrier 120. Accordingly, the barrier 120 may block flame and gas from one accommodating space 113 from spreading to an adjacent accommodating space 113 and suppress thermal propagation from one accommodating space 113 to the adjacent accommodating space 113. That is, the barrier 120 not only reinforces the rigidity of the pack case 110 but also blocks thermal propagation between adjacent accommodating spaces 113.

The plurality of battery modules 130 are accommodated in the plurality of accommodating spaces 113 provided in the pack case 110, respectively. The battery module 130 includes a plurality of battery cells. In some embodiments, the battery module 130 may be implemented in the form of a housing accommodating a plurality of battery cells. In some embodiments, the battery module 130 may be implemented in the form of a battery cell assembly in which a plurality of battery cells are fixed to each other.

The plurality of battery cells constituting the battery module 130 may include at least one type of cylindrical battery cell, a prismatic battery cell, or a pouch-type battery cell. Furthermore, even within a single type of battery cell, battery cells may have different specifications, different types of electrodes, different types of electrode assemblies, and/or different types of electrolytes. In some embodiments, the battery cell may have an electrode assembly impregnated with an electrolyte. In some embodiments, the electrode assembly may have a cathode, anode and separator stacked or wound.

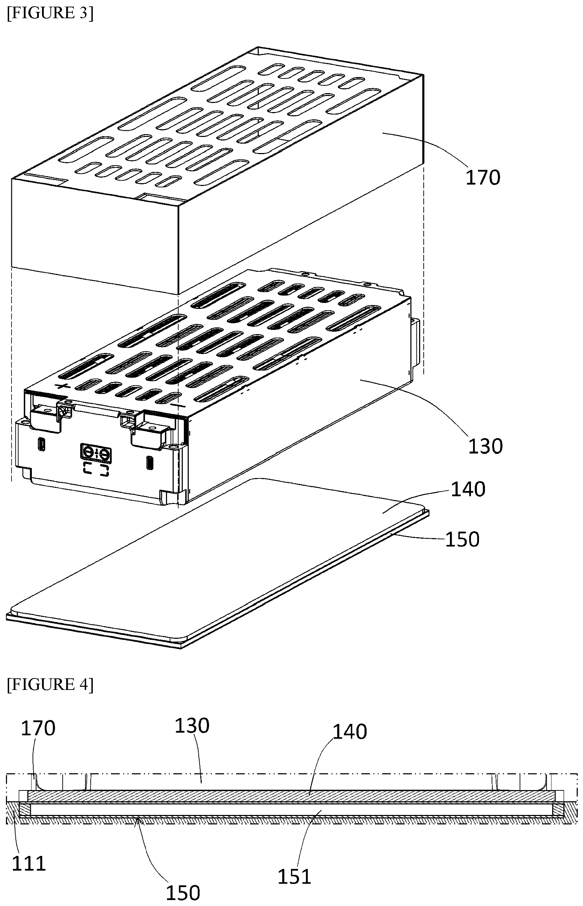

Terminals of different polarities (see FIG. 3) are installed at the battery module 130. The locations of the terminal installation may vary. The terminals of the battery module 130, although not shown, may be bonded to and electrically connected to a plurality of bus bars arranged in a bus bar frame. The plurality of bus bars may be connected in series and/or in parallel to the plurality of battery modules 130 to achieve the required capacity and output voltage of the battery pack 100.

The plurality of first insulation members 140 are installed in the battery pack 100. The plurality of first insulation members 140 are arranged in the plurality of accommodating spaces 113 to support the lower portions of the plurality of battery modules 130, respectively. The first insulation member 140 forms at least a portion of the heat conduction path between the lower surface of the battery module 130 and the lower plate 111, thereby blocking heat from being transmitted to another adjacent battery module 130 through the lower plate 111 of the pack case 110 in the event of thermal runaway of the battery module 130. The first insulation member 140 may be in the form of a plate to stably support the lower surface of the battery module 130.

The first insulation member 140 may be made of an insulating material that maintains a constant temperature for a long period of time and blocks heat inflow. For example, the first insulation member 140 may be made of a glassy insulating material, a mineral insulating material, a metallic insulating material or a carbonaceous insulating material. For example, glass wool may be used as the glassy insulating material, and asbestos, rock wool, and perlite may be used as the mineral insulating material. The metallic insulating material may be a siliceous material, alumina, or magnesia material that may be used as a high-temperature refractory insulating material. Carbonaceous insulating material may be carbon fiber, carbon powder, etc. Thus, the first insulation member 140 may be made of various insulating materials as long as heat generated from the battery module 130 is effectively blocked from being transmitted to the lower plate 111.

The first insulation member 140 may include at least one of mineral wool, glass wool, ceramic fiber, silica, and perlite, which have a porous fiber structure and excellent insulation performance.

Furthermore, the battery pack 100 includes the plurality of second insulation members 150. The plurality of second insulation members 150 are disposed under the plurality of first insulation members 140, respectively. The first insulation member 140 and the second insulation member 150 may be provided in a stacked configuration.

The second insulation member 150 includes an insulation space 151 that blocks thermal propagation to the adjacent battery module 130 through the lower plate 111 of the pack case 110 in the event of thermal runaway of the battery module 130. The insulation space 151 separates the first insulation member 140 and the lower plate 111 of the pack case 110 by a predetermined distance.

The second insulation member 150 is disposed between the first insulation member 140 and the lower plate 111. Accordingly, the second insulation member 150 forms at least a portion of the heat conduction path between the first insulation member 140 and the lower plate 111, thereby preventing thermal propagation to another adjacent battery module 130 through the lower plate 111 of the pack case 110 in the event of thermal runaway of the battery module 130.

The material constituting the second insulation member 150 may be a material corresponding to the material of the first insulation member 140 described above, or a different material. The second insulation member 150 may be manufactured from a material with a higher strength than the first insulation member 140. Accordingly, the rigidity that may be weakened by the insulation space 151 may be reinforced. For example, the second insulation member 150 may be made of a high-strength synthetic resin material, a metal material, a ceramic material or composites thereof.

The insulation space 151 may accommodate air. Air has a thermal conductivity of approximately 0.025W/(m·K). Although air has very high insulation performance, air is fluid such that air functions as an insulating material only when confined in the insulation space 151.

Some battery cells in the battery module 130 may ignite or undergo thermal runaway due to the degradation caused by the charging and discharging of battery cells or external shocks. As a result, thermal propagation to neighboring battery cells may occur within the same battery module 130, causing the battery module 130 to undergo thermal runaway or ignite. That is, a battery cell or a battery module including the same may undergo thermal runaway or ignition due to internal factors of the battery module 130 such as a temperature rise, or external factors such as an external shock.

The heat generated when some battery modules 130 within the battery pack 100 undergo thermal runaway may be transmitted to the outside via a thermal propagation path toward the lower plate 111 of the battery pack 100 where the battery module 130 is placed, and a convective thermal propagation path that creates a high-temperature and high-pressure environment by heating the gas in the accommodating space 113 of the internal space of the battery pack 100 where the battery module 130 is accommodated.

Here, the heat from the battery module 130 undergoing thermal runaway is first blocked by the first insulation member 140 and secondarily blocked by the insulation space 151 of the second insulation member 150.

In addition, even when heat is transmitted to the lower plate 111 via the insulation members 140 and 150, the heat is also blocked from propagating to the adjacent battery module 130. That is, in the path through which heat from the lower plate 111 is transmitted to the adjacent battery module 130, the thermal propagation is first blocked by the insulation space 151 of the second insulation member 150 supporting the lower portion of the adjacent battery module 130, and secondarily blocked by the first insulation member 140 again.

Furthermore, while thermal propagation is blocked, heat is released to the outside through the lower plate 111, side plate and pack lid 112 of the pack case 110 having superior thermal conductivity.

As a result, the high temperature generated from a battery module 130 that is undergoing thermal runaway or ignition is blocked from being transmitted to the neighboring battery module 130 through the lower plate 111, thereby preventing a thermal runaway chain reaction.

In this way, blocking heat of the battery module 130 undergoing thermal runaway from being transmitted to the neighboring battery module 130 while allowing the heat to be quickly discharged to the outside is possible by installing the plurality of second insulation members 150 to be spaced apart from each other laterally. That is, the second insulation members 150 are installed separately from each other, one at a time, in each accommodating space 113.

Preferably, the upper surface of the first insulation member 140 may be disposed higher than the bottom surface of the pack case 110, i.e., the upper surface of the lower plate 111. Accordingly, the lower surface of the battery module 130 may be disposed to be spaced apart from the upper surface of the lower plate 111 by a height equal to the upper surface of the first insulation member 140. Accordingly, the lower plate 111 may be kept away from the thermal influence of the battery module 130.

Preferably, the insulation space 151 may be disposed lower than the bottom surface of the pack case 110, i.e., the upper surface of the lower plate 111. Accordingly, the insulation space 151 may be prevented from facing the accommodating space 113 with the material portion of the second insulation member 150 therebetween. Accordingly, thermal propagation between the battery module 130 and the second insulation member 150 through any path other than the first insulation member 140 may be prevented. Additionally, as the height of the insulation space 151 decreases, the volume of the accommodating space 113 is increased, preventing the space utilization of the battery pack 100 from being reduced by the insulation space 151.

More preferably, the upper surface of the second insulation member 150 may be disposed at a height corresponding to the upper surface of the lower plate 111. Accordingly, the second insulation member 150 may contribute to the rigidity of the lower plate 111.

The first insulation member 140 and the insulation space 151 may be wider than the lower surface of the battery module 130. Accordingly, the thermal separation distance between the side surface of the battery module 130 and the lower plate 111 may be further increased.

Meanwhile, the battery pack 100 may include a heat-resistant cover 170 that surrounds the upper and side surfaces of the battery module 130 to protect the battery module 130 from high-temperature, high-pressure gases and flames transmitted due to thermal runaway of the adjacent battery module 130. For example, a mica sheet with superior insulation properties may be used as the heat-resistant cover 170. Apparently, the material of the heat-resistant cover 170 may be at least one of the materials of the first insulation member 140 described above.

The heat-resistant cover 170 may protect the battery module 130 from gases or flames flowing back through the top hole of the pack lid 112 in the event of thermal runaway of the adjacent battery module 130.

Next, a battery pack according to a second embodiment of the present invention will be described. Since the second embodiment is identical to the first embodiment except for the structure of the second insulation member, the same reference numerals will be given to the same elements as the first embodiment and the descriptions thereof will be omitted.

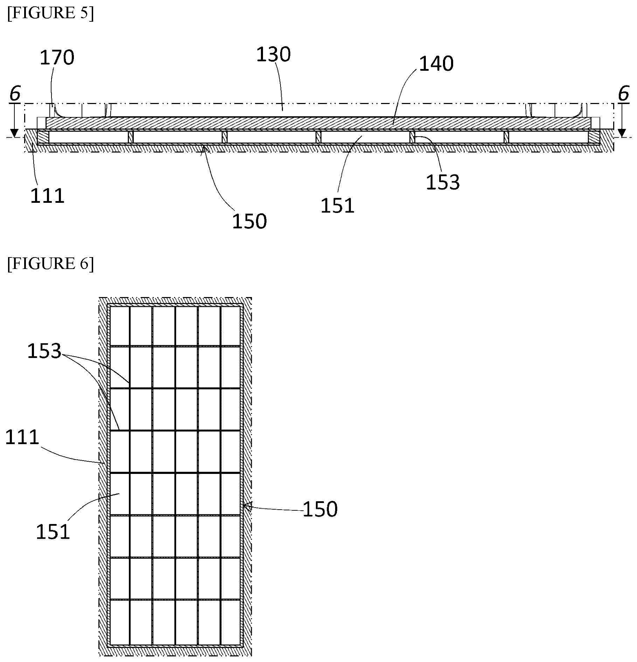

Referring to FIGS. 5 and 6, the second insulation member 150 may include one or more partition walls 153 that divide the insulation space 151 into a plurality of spaces. The partition wall 153 may extend in the first or second direction and be vertically erected to divide the insulation space 151 within the second insulation member 150. As shown in FIG. 6, in the embodiment, five partition walls 153 extending in the first direction and spaced apart in the second direction, and seven partition walls 153 extending in the second direction and spaced apart in the first direction are exemplified.

According to the embodiment, since the insulation space 151 is divided into a plurality of spaces by the partition wall 153, the convection region of gas within the insulation space 151 may be further restricted, thereby further enhancing insulation performance. Furthermore, since the partition wall extends vertically, the rigidity of the second insulation member 150 capable of resisting external shocks and supporting the weight of the battery module 130 may be further enhanced. That is, the partition wall 153 restricts air flow and increases the rigidity of the second insulation member 150.

The partition wall 153 may be installed vertically in the insulation space 151 to support the second insulation member 150. The partition wall 153 may be arranged parallel to the widthwise or lengthwise direction of the second insulation member 150. In addition, a plurality of partition walls 153 may be arranged at equal intervals. The partition wall 153 may reduce the possibility of the second insulation member 150 collapsing due to the load of the battery module 130 or an external shock. In addition, even when the partition wall 153 is installed in the insulation space 151, the height of the insulation space 151 does not change such that the insulation performance of the insulation space 151 is hardly degraded.

Next, a battery pack according to a third embodiment of the present invention will be described. Since the third embodiment is identical to the first embodiment except for the structure of the second insulation member, the same reference numerals will be given to the same elements as the first embodiment and the descriptions thereof will be omitted.

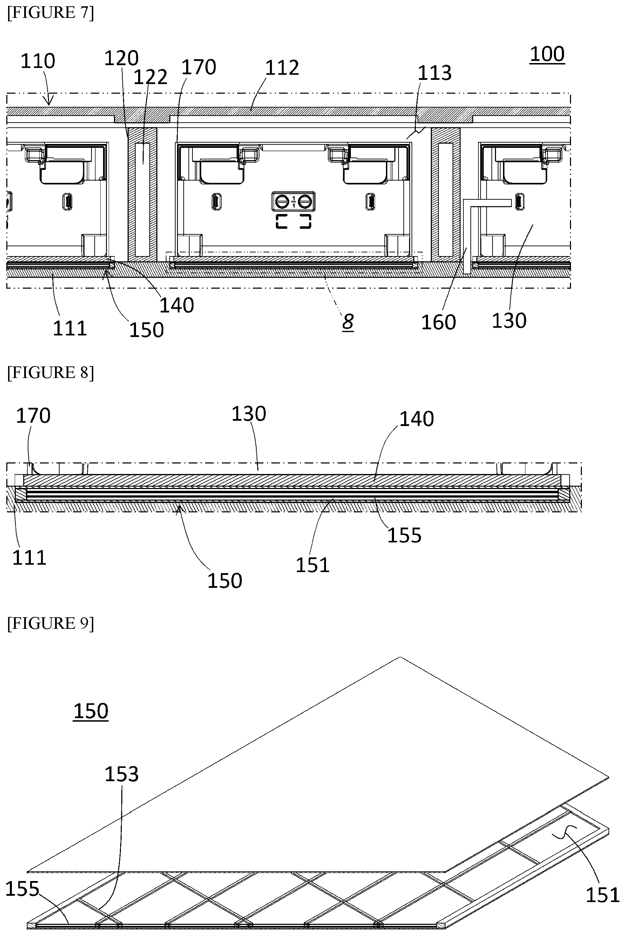

Referring to FIGS. 7 and 8, the second insulation member 150 may include a partition wall 155 that divides the insulation space 151 into upper and lower portions. Here, the partition wall 155 may divide the insulation space 151 into an upper space and a lower space. The number of partition walls 155 may vary depending on the height of the insulation space 151. Since the insulation space 151 is divided along the vertical direction, heat from the battery module 130 may be blocked in stages from being transmitted to the lower plate 111 in the event of thermal runaway of the battery pack 100.

Meanwhile, referring to FIG. 7, despite the thermal propagation prevention structures 120, 140, 150 and 170 between the battery modules described above, a heat dissipation structure 160 for the battery module 130 may also be applied. The heat dissipation structure may be implemented without overlapping with the thermal propagation prevention structure. A cooling path 160 for promoting heat dissipation of the battery module 130 may be connected to the side surface or lower surface of the battery module 130 and extend outward through the lower plate 111 of the pack case 110 exposed to the accommodating space.

For example, the heat dissipation structure 160 may be manufactured from a material having a thermal conductivity dropping sharply or melts to break when the temperature rises above a predetermined temperature. Accordingly, when the battery module 130 undergoes thermal runaway, the effect of the cooling path 160 being eliminated may be obtained.

Next, a battery pack according to a fourth embodiment of the present invention will be described. Since the fourth embodiment is identical to the first embodiment except for the structure of the second insulation member, the same reference numerals will be given to the same elements as the first embodiment and the descriptions thereof will be omitted.

Referring to FIG. 9, the second insulation member 150 may include both a partition wall 153 extending in the first or second direction and erected vertically to divide the insulation space 151 within the second insulation member 150, and a partition wall 155 dividing the insulation space 151 into upper and lower spaces. That is, the second insulation member 150 may include both a vertical partition wall 153 and a horizontal partition wall 155. The effects resulting from the addition of such partition walls 153 and 155 have been described in the second and third embodiments.

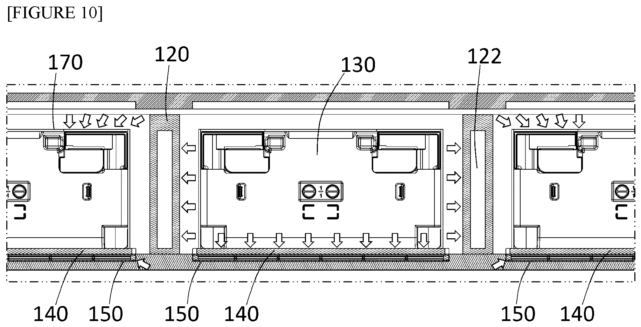

With reference to FIG. 10, the operational effects of the battery pack 100 according to an embodiment of the present invention will be described. When thermal runaway occurs in a battery module 130 placed in an accommodating space 113 inside a battery pack 100, the path through which heat is conducted from the lower surface of the battery module 130 to the lower plate 111 is blocked in stages by the first insulation member 140 and the second insulation member 150. In addition, the path through which heat generated from the battery module 130 convects is shielded by the barrier 120. Furthermore, since the barrier 120 has a hollow barrier insulation space 122, heat conduction through the barrier 120 is also blocked.

Moreover, heat from high-temperature gases or flames transmitted to the adjacent accommodating space 113 through the space within the pack lid 112 or the space between the pack lid 112 and the barrier 120 is blocked by the heat-resistant cover 170 surrounding the upper and side surfaces of the adjacent battery module 130, thereby preventing thermal propagation to the upper and side surfaces of the adjacent battery module 130.

In addition, even when some heat is conducted through the lower plate 111, the presence of the second insulation member 150 and the first insulation member 140 in the heat conduction path between the adjacent battery module 130 and the lower plate 111 prevents thermal propagation to the lower surface of the adjacent battery module 130.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a pack case (110);
a barrier (120) installed in the pack case (110) to form a plurality of accommodating spaces (113);
a plurality of battery modules (130) disposed in the plurality of accommodating spaces (113), respectively;
a plurality of first insulation members (140) disposed in the plurality of accommodating spaces to support lower portions of the plurality of battery modules (130), respectively, and block a thermal propagation to an adjacent battery module through a lower portion of the pack case (110) during thermal runaway of the plurality of battery modules (130); and
a plurality of second insulation members (150) disposed under the plurality of first insulation members (140), respectively, and provided with an insulation space (151) to block the thermal propagation to the adjacent battery module through the lower portion of the pack case (110) during thermal runaway of the plurality of battery modules (130).

2. The battery pack of claim 1, wherein the plurality of second insulation members (150) are installed laterally spaced apart from each other with the barrier (120) interposed therebetween.

3. The battery pack of claim 1, wherein an upper surface of each of the plurality of first insulation members (140) is disposed higher than a bottom surface of the pack case (110).

4. The battery pack of claim 1, wherein the insulation space (150) is disposed lower than a bottom surface of the pack case (110).

5. The battery pack of claim 1, wherein each of the plurality of first insulation members (140) and the insulation space (151) are formed to be wider than a lower surface of each of the plurality of battery modules (130).

6. The battery pack of claim 1, wherein each of the plurality of second insulation members (150) comprises one or more partition walls (153, 155) partitioning the insulation space (151) into a plurality of spaces.

7. The battery pack of claim 6, wherein the partition wall (153) is vertically erected in the insulation space (151) to support the plurality of second insulation members (150).

8. The battery pack of claim 6, wherein the partition wall (155) partitions the insulation space (151) in vertical direction.

9. The battery pack of claim 1, further comprising a heat-resistant cover (170) installed to surround an upper side surface and a sidewall surface of each of the plurality of battery modules (130) to protect the plurality of battery modules (130) from transmitted flames.

10. The battery pack of claim 1, wherein the barrier (120) is provided with a barrier insulation space (122) therein.
